# EUROPEAN PATENT APPLICATION

(11) **EP 4 523 883 A1**
(43) Date of publication of application: **19.03.2025**
(21) Application number: 24200223.6
(22) Date of filing: 13.09.2024
(51) Int. Cl.: B29C 45/16, A61J 1/14, B65D 51/00, B29L 31/56

(54) **METHOD OF MANUFACTURING STOPPER WITH SEPTUM FOR MEDICAL CONTAINER, THE STOPPER AND POLYMER COMPOSITION FOR THE SEPTUM**

(30) Priority: 15.09.2023 US 202363538687 P
(71) Applicant: TSRC Corporation, Kaohsiung City 815040 (TW)
(72) Inventor: Ding, Yuanpang, Chicago, 60611 (US); Chou, Chien-Liang, 815003 Kaohsiung City (TW); Kuo, Ching-Han, 741009 Tainan City (TW); Lin, Pang-Hsuan, 820118 Kaohsiung City (TW)
(74) Representative: Flaccus, Rolf-Dieter

(57) **Abstract**

The present invention provides a manufacturing method for a stopper (7) used in medical containers, the stopper (7) having a septum (3b) and a housing (6) supporting the septum (3b) , the manufacturing method comprising firstly creating the septum (3b) using a first molding process with a thermoplastic elastomer composition; then creating the housing (6) using a second molding process with a plastic composition, by the second molding process the septum (3b) being pre-compressed in a radial direction perpendicular to a needle penetration direction of the septum (3b); and subjecting the stopper (7) to a steam sterilization, wherein after the septum (3b) experiences the steam sterilization, the septum (3b) exhibits a residual pre-compression level of 12% to 30% in the radial direction compared to when the septum (3b) is uncompressed, and the residual pre-compression level is measured based on a thickness or average diameter of the septum (3b).

## Description

### CROSS-REFERENCE TO RELATED APPLICATIONS

This application is a non-provisional of, and claims priority to and the benefit of, U.S. Provisional Patent Application No. 63/538,687, filed September 15, 2023 and entitled "METHOD OF MANUFACTURING STOPPER WITH SEPTUM FOR MEDICAL CONTAINER, THE STOPPER AND POLYMER COMPOSITION FOR THE SEPTUM" which is hereby incorporated by reference herein.

### FIELD OF INVENTION

The present invention relates to a stopper with a septum for a medical container and a method for manufacturing the stopper, wherein the septum is made from a polymer composition, particularly a polymer composition containing thermoplastic elastomer (TPE).

### BACKGROUND OF THE DISCLOSURE

Medical infusion bags are typically containers used to package liquids, such as blood or intravenous fluids. To prevent the filled liquid from leaking, a stopper is embedded in the container's opening. Usually, the stopper structure comprises a septum and a housing supporting the septum. During use, a needle can pierce the septum to release the liquid. Therefore, when the needle is withdrawn or remains inserted for an extended period, septum leakage may occur.

To address this issue, Patent Document 1, CN1091023C, discloses a rubber stopper compressed by an external holder, resulting in the diameter of at least one of a top face and a bottom face of the rubber stopper shrinking by 1-10%. Patent Document 2, TW570824B, discloses a needle-pierce stopper with a puncture section made of thermoplastic elastomer, which undergoes heat treatment at 80-120°C to relieve internal stress. Although these prior art documents claim to prevent septum leakage, various issues still need to be improved in practice.

### SUMMARY OF THE DISCLOSURE

### The problem to be solved

### Permanent Compression Deformation and Thermal Stress (Tension) Effects

The inventors of this application found that long-term insertion of a needle into the septum easily causes slits at the insertion site due to compression deformation, leading to inevitable leakage, especially when the intravenous bag contains high liquid pressure. Additionally, if the liquid's surface tension is low, leakage may occur even at lower liquid pressure. Moreover, for the process of first injection molding the plastic housing and then injection molding the TPE septum, the high thermal shrinkage of the septum material during the cooling process generates internal tension (from ~200°C to room temperature). The coefficient of thermal expansion (CTE) of a low-modulus elastomer is about 200-250×10⁻⁶/°C, and that of PP is about 60-100×10⁻⁶/°C. Although this internal tension can be partially released during steam sterilization, it cannot be fully released. This tension exacerbates the slits formed due to needle insertion.

The inventors of this application also noted that in the stopper assembly using a rubber stopper as a septum, disclosed in Patent Document 1, an additional synthetic resin film must be added between the rubber stopper and the outer holder to bond them together due to the incompatibility of rubber with the outer holder. Patent Document 2 uses thermoplastic elastomer for the puncture section (septum), but the residual stress in the puncture section easily causes liquid leakage, so Patent Document 2 requires heat treatment of the puncture section to remove the stress. The methods in Patent Document 1 and 2 increase the complexity of the septum manufacturing process. Meanwhile, the inventor of the application even found that when the thermoplastic elastomer septum was subjected to the shrinkage as described in Patent Document 1, the diameter shrinkage rate was already as high as 8% and still failed to meet the expected leakage prevention effect, furthermore, it was unexpectedly found that the shrinkage rate of the thermoplastic elastomer septum continued to decrease slowly with the storage time being lengthened or stored in unfavorable environments.

### Solution to the Problem

The present invention provides mechanical pre-compression of the septum to overcome the above-mentioned permanent compression deformation and thermal stress effects. The septum is made from a thermoplastic elastomer and does not require an additional synthetic resin film between the septum and the support housing. Additionally, after steam sterilization, the stopper of the present invention maintains a residual pre-compression level of 12% to 30% in the radial direction, preferably 12% to 25%, and more preferably 12% to 20%. This high level of residual pre-compression allows the septum to retain sufficient internal compression stress over time. When external environmental changes cause the internal compression stress to gradually decrease, the septum of the present invention, with its higher internal compression stress, prevents this stress from quickly dropping below a critical value. Therefore, the septum of the present invention can effectively prevent liquid leakage over a long period, making it advantageous for storage and other multi-purpose uses. Furthermore, the septum of the present invention does not become overly rigid due to its high residual pre-compression level and still maintains good puncture performance.

Additionally, in preferred embodiments, the thermoplastic elastomer septum of the present invention does not require heat treatment or other pre-treatments to remove stress before being pre-compressed.

The present invention provides a method for generating pre-compressed elastomer septum suitable for co-injection molding processes, insert-molding processes, over-molding processes, or multi-shot injection molding processes. The present invention does not use the process of first injection molding the plastic housing and then injection molding the elastomer septum.

The method of the present invention comprises (1) a over-molding process in which a molded elastomer septum (e.g., using a thermoplastic elastomer composition) is first injected, or an insert molding process in which the molded elastomer septum is used as an insert member, and (2) injection molding the plastic housing around the elastomer septum in the radial direction. The injection temperature, injection pressure, and holding pressure must be high enough to (i) produce significant radial compression of the elastomer septum, and (ii) bind tightly to the elastomer septum. In a preferred embodiment, the common lower mold used to support the elastomer septum has a movable moving pin below the elastomer septum's centerline to form a cavity for the elastomer septum to expand into. In a preferred embodiment, the plastic melt is used to radially inwardly compress the elastomer septum, causing the elastomer septum to be compressed radially and expand axially (i.e., a direction perpendicular to the radial direction) into the cavity. As a result, the elastomer septum will be radially compressed by the plastic housing, producing built-in pre-compression.

In some embodiments, the present invention provides at least one of the following features.

The present invention provides a stopper (e.g. an intravenous container plug) with an elastomer septum (e.g., using thermoplastic elastomer composition) that has a high level of residual pre-compression in the radial direction (substantially perpendicular to the direction of needle piercing), which can immediately reseal after needle withdrawal to prevent liquid leakage.

The present invention uses co-injection molding process, insert-molding process, over-molding process, or multi-shot injection molding process, where the elastomer septum (e.g., a thermoplastic elastomer composition) is first molded, followed by the molding of the plastic housing. During the plastic housing molding step, the present invention uses the pressure of the plastic melt for the plastic housing to radially inwardly compress the elastomer septum (e.g., a thermoplastic elastomer composition), causing the elastomer septum to deform into the space in the axial direction (i.e., a direction perpendicular to the radial direction), thereby generating radial pre-compression.

The desired pre-compression level produced by co-injection molding process, insert-molding process, over-molding process, or multi-shot injection molding process should be greater than 12% and up to 40%. After 30 minutes of steam sterilization at 110°C or 121°C, the residual pre-compression level should still be between 12% and 30%, preferably between 12% and 25%, and more preferably between 12% and 20%. The pre-compression level and the residual pre-compression level of the septum is calculated based on the thickness or average diameter of the septum during the molding step.

The pre-compressed septum concept of the present invention can be applied to various materials and compositions, particularly thermoplastic elastomer compositions. Thermoplastic elastomers include thermoplastic vulcanizates (TPV), styrenic block copolymers (SBC), thermoplastic polyurethane elastomers (TPU), thermoplastic polyolefin elastomers (TPO), thermoplastic polyester elastomers (TPE-E), or thermoplastic polyamide elastomers (TPEA). In a preferred embodiment, the styrenic block copolymer comprises one or any combination of the following: styrene-ethylene-butylene-styrene block copolymer (SEBS), styrene-isoprene-styrene block copolymer (SIS), styrene-butadiene-styrene block copolymer (SBS), styrene-ethylene-propylene-styrene block copolymer (SEPS), styrene-(isoprene/butadiene)-styrene block copolymer (S-(I/B)-S), or styrene-[ethylene-(ethylene-propylene)]-styrene block copolymer (SEEPS). In a preferred embodiment, the thermoplastic elastomer is thermoplastic vulcanizate (TPV) or styrenic block copolymer (SBC), with a residual pre-compression level between 12% and 30%, preferably between 12% and 25%, more preferably between 12% and 20%. In a preferred embodiment, the Shore A hardness of the thermoplastic elastomer composition is Shore A 30 to Shore A 50, preferably Shore A 35 to Shore A 50, and more preferably Shore A 35 to Shore A 45. In a preferred embodiment, the elongation at break of the thermoplastic elastomer composition is equal to or greater than 250%, and more preferably greater than 300%.

The plastic composition used for the housing preferably includes any rigid plastic with a modulus of elasticity greater than 3,000 psi. In a preferred embodiment, the plastic composition preferably has a modulus of elasticity greater than 10,000 psi, or preferably greater than 50,000 psi, and a Tg (glass transition temperature) greater than - 90°C or a Tm (melting temperature) greater than 121°C. The main components of the plastic composition specifically include polyolefins, polycarbonate, polycarbonate alloys, PP/SEBS alloys, high modulus thermoplastic polyurethane elastomers (TPU), high modulus thermoplastic polyester elastomers (TPE-E), etc.

The present invention provides a stopper manufactured using the abovementioned methods.

The present invention also includes other aspects and various embodiments to solve other problems. These and other aspects are detailed in the implementation examples.

### DETAILED DESCRIPTION OF EXEMPLARY EMBODIMENTS

The invention will be further explained in more detail based on exemplary specific embodiments shown in the accompanying drawings, in which:
Figures 1A, 1B, and 1C are schematic diagrams of the first molding process in one embodiment of the present invention;
Figures 2A, 2B, and 2C are schematic diagrams of the second molding process of an embodiment of the present invention; and
Figure 3 is a schematic diagram of a stopper with a septum and housing from an embodiment of the present invention.

In order to make the present invention and the scope of the patent application to be claimed herein fully understandable, the following will demonstrate a preferred embodiment of the present invention. In order to avoid ambiguity of the present invention, the following description omits known components, related materials, and their related processing techniques. Relevant processing techniques can be found in the following literature: T/CNPPA3016-2021: Technical guide for co-injection closure for intravenous container (CN); ISO15759: 2005 Medical infusion equipment - Plastics caps with inserted elastomeric liner for containers manufactured by the blow-fill-seal (BFS) process.

### Septum material - Thermoplastic elastomer composition

The septum of the present invention can be made from various thermoplastic elastomer compositions as mentioned above. Thermoplastic elastomer composition comprises one or any combination of the following: thermoplastic vulcanizate (TPV), styrenic block copolymer (SBC), thermoplastic polyurethane elastomer (TPU), thermoplastic olefin elastomer (TPO), thermoplastic polyester elastomer (TPE-E), or thermoplastic polyamide elastomer (TPE-A). Among them, thermoplastic vulcanizates (TPV) refer to blends of rubber and plastic that have undergone dynamic vulcanization treatment. Specific examples include TPVs like Santoprene and Geolast, with preferred options such as Celanese Corporation's Santoprene 8281-35MED or Santoprene 8281-45MED. Specific examples of styrenic block copolymers (SBC) include SEBS (styrene-ethylene-butylene-styrene block copolymer), SIS (styrene-isoprene-styrene block copolymer), SBS (styrene-butadiene-styrene block copolymer), SEPS (styrene-ethylene-propylene-styrene), SEEPS (Styrene-[ethylene-(ethylene-propylene)]-styrene block copolymer), etc. Thermoplastic polyurethanes (TPU) are copolymers of polyester or polyether with diisocyanates. Specific examples include Estane and Texin's TPU, with preferred options such as BASF's Elastollan^{®} Soft 35A 12 P or Elastollan^{®} B CF 45A 12 P. Thermoplastic polyolefin elastomers (TPO) are primarily composed of polypropylene or polyethylene combined with ethylene-propylene-diene monomer rubber, with specific examples including Vistamaxx, Versaflex HC, and COHERE's TPO. Thermoplastic polyester elastomers (TPE-E) are copolymers of polyester and polyether, with specific examples including Hytrel and Arnitel's TPE-E. Thermoplastic polyester amide (TPEA) is composed of polyester and polyamide, with specific examples including Vestamid^{®} Care and Arnitel^{®} VT.

In a preferred embodiment, hydrogenated styrenic block copolymers are preferred. Compared to rubber materials or other thermoplastic elastomers, hydrogenated styrenic block copolymers inherently possess good elasticity, processability, and weather resistance, and do not require additional vulcanizing agents or crosslinking agents. This can reduce the risk of contaminating the contents when used for medical packaging.

In a preferred embodiment, the thermoplastic elastomer composition used for manufacturing medical container septum of the present invention comprises: (a) 100 parts by weight of a block copolymer of formula A-B-A, where A is a vinyl aromatic block; B is a hydrogenated conjugated diene block with a hydrogenation degree of over 90%, (b) 50-250 parts by weight of a plasticizer, and (c) 5-100 parts by weight of a polyolefin homopolymer. The block A is derived from selected monomers including styrene, methyl styrene and all its isomers, ethyl styrene and all its isomers, cyclohexyl styrene, vinyl biphenyl, 1-vinyl-5-hexyl naphthalene, vinyl naphthalene, vinyl anthracene, and any combination thereof. The block B is derived from 1,3-butadiene, 2,3-dimethyl-1,3-butadiene, 3-butyl-1,3-octadiene, isoprene, 1-methylbutadiene, 2-phenyl-1,3-butadiene, and any combination thereof. In a preferred example, the A block is styrene block while the B block is 1,3-butadiene block or isoprene block, or the co-block of butadiene and isoprene. Specific examples of block copolymers include SEBS (styrene-ethylene-butylene-styrene block copolymer), which is the hydrogenated copolymer of SBS (styrene-butadiene-styrene block copolymer); SEPS (styrene-ethylene-propylene-styrene block copolymer), which is the hydrogenated copolymer of SIS (styrene-isoprene-styrene block copolymer); and SEEPS (styrene-[ethylene-(ethylene-propylene)]-styrene block copolymer), which is the hydrogenated copolymer of S-(I/B)-S (styrene-(isoprene/butadiene)-styrene block copolymer), among others. The aforementioned block copolymers can consist of either a single type or any combination of multiple types. In a preferred embodiment, the block copolymer comprises a first block copolymer and a second block copolymer. In one embodiment, the difference between the first block copolymer and the second block copolymer is that the weight-average molecular weight of the first block copolymer is greater than that of the second block copolymer. More preferably, the content ratio of the first block copolymer to the second block copolymer is from 1:4 to 1:1. For example, in a more preferred embodiment, the block copolymer includes SEBS with a weight-average molecular weight of about 440,000 (the first block copolymer) and SEBS with a weight-average molecular weight of about 250,000 (the second block copolymer), with a content ratio of the first block copolymer to the second block copolymer ranging from 1:4 to 1:1.

In a preferred embodiment, the thermoplastic elastomer composition used for manufacturing medical container a septum further comprises: (d) greater than 0 but not more than 150 parts by weight of fillers, and (e) greater than 0 but not more than 50 parts by weight of polyphenylene ether (PPE, also known as polyphenylene oxide, PPO, with PPO being more commonly used in industry). In a preferred embodiment, the melt flow index (MFI) of the thermoplastic elastomer composition is between 2 g/10min and 60 g/10min (at 230°C, 5kg). In another example, the weight average molecular weight (Mw) of the block copolymer ranges from 200,000 to 500,000, preferably from 200,000 to 450,000, and more preferably from 220,000 to 450,000, with the weight average molecular weight (Mw) of block A from 5,000 to 100,000, preferably from 10,000 to 80,000, more preferably from 20,000 to 60,000. In another embodiment, the bonded vinyl aromatic content of the block copolymer is 20% to 50% by weight of the block copolymer, preferably 25% to 45%, and more preferably 30% to 40%. The vinyl bond content of the block copolymer is 32% to 42% by weight of block B of the block copolymer, preferably 32% to 40%, and more preferably 35% to 40%. In another example, the plasticizer is white oil. In another example, the plasticizer is polyisobutylene. In another example, the polyolefin homopolymer is polypropylene. In another example, the fillers are kaolin, silica, mica, calcium silicate, or calcium carbonate.

### Housing - Plastic Composition

The housing of the present invention can be made from various plastic compositions as mentioned above. The preferred selection is for materials that can be made with high impact resistance and chemical durability. The plastic composition comprises one or any combination of the following: polyolefin, polycarbonate, polycarbonate alloy, polypropylene/styrene-ethylene-butylene-styrene block copolymer alloy (PP/SEBS alloy), high modulus thermoplastic polyurethane elastomer, or high modulus thermoplastic polyester elastomer. Specific examples of polyolefins include polypropylene (PP) and high-density polyethylene (HDPE). Specific examples of polycarbonate (PC) include Makrolon, LEXAN, and Panlite. Polycarbonate alloys are materials formed by blending polycarbonate with other polymers (such as ABS, PBT, or PET). Specific examples include Makrolon PC+ABS, PC+PBT, Lexan PC+ABS, and PC+PET, etc. PP/SEBS alloy is a material mixture composed of polypropylene and hydrogenated styrene block copolymers, with specific examples being the PP/SEBS alloys from Kraton Polymers, SABIC, and LyondellBasell. Specific examples of high-modulus thermoplastic polyurethane elastomers (TPU) include Elastollan, Irogran, and Desmopan high-modulus TPU. Specific examples of high-modulus thermoplastic elastomers (TPE-E) include the Kraton TPE-E series and Tritan TPE-E. It is worth noting that if the thermoplastic elastomer composition uses TPU, due to material compatibility, the preferred plastic composition to pair with it is PC.

### Manufacturing Process of the Stopper for Medical Containers

The present invention provides a manufacturing method for a stopper used in medical containers, the stopper having a septum and a housing supporting the septum. The manufacturing method comprises Step (1) firstly creating the septum using a first molding process with a thermoplastic elastomer composition; Step (2) then creating the housing using a second molding process with a plastic composition, by the second molding process the septum being pre-compressed in a radial direction perpendicular to a needle penetration direction of the septum; Step (3) subjecting the stopper to a steam sterilization, wherein after the septum experiences the steam sterilization, the septum exhibits a residual pre-compression level of 12% to 30% in the radial direction compared to when the septum is uncompressed, and the residual pre-compression level is measured based on a thickness or average diameter of the septum.

### Step (1): The first molding process

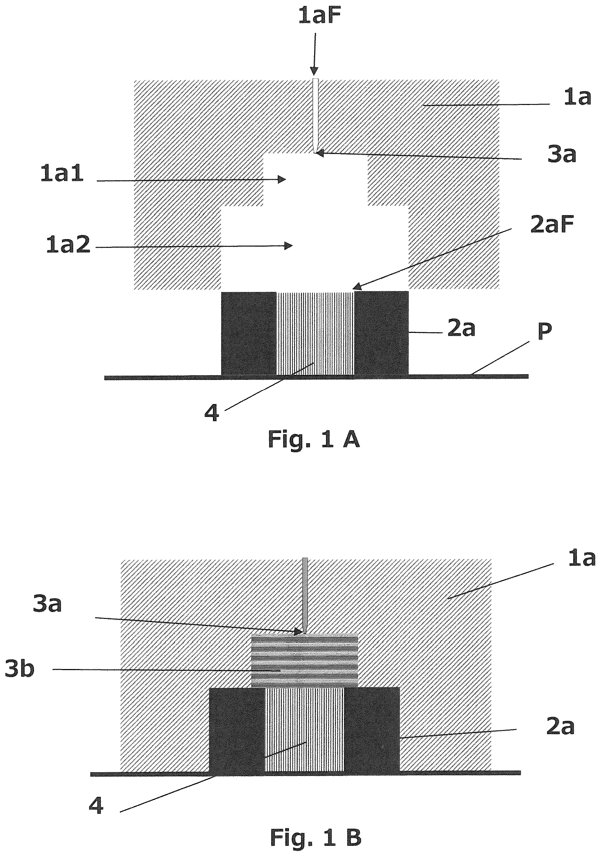

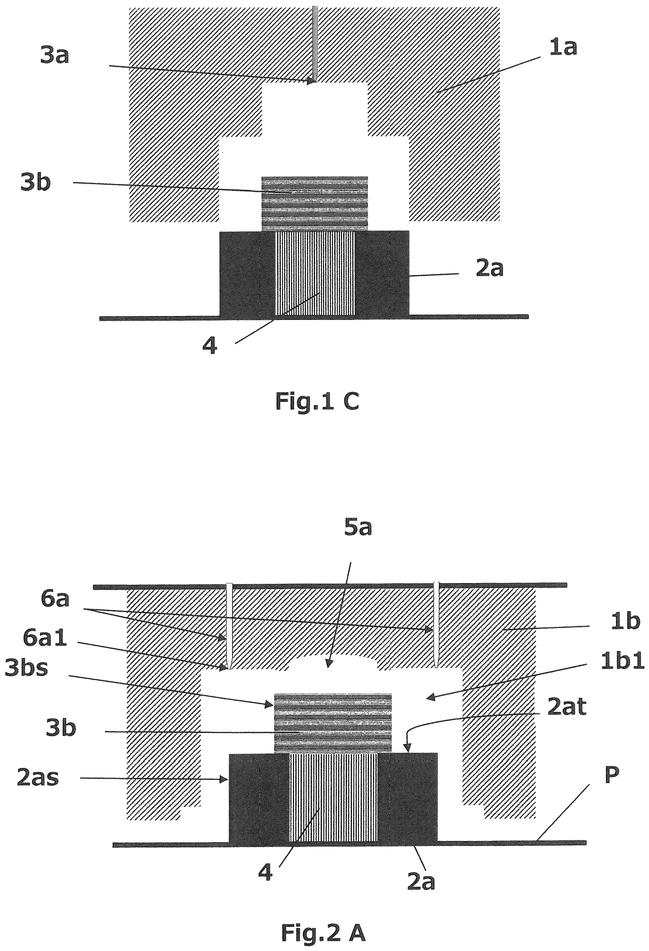

Step (1): Creating the septum using a first molding process with a thermoplastic elastomer composition. In detail, a suitable thermoplastic elastomer composition is first prepared by melting and kneading various components of the composition in an extruder according to the formulation to produce pellets for injection molding to manufacture the septum. Referring to Figures 1A, 1B, and 1C, the first molding process includes providing a first upper mold 1a and a common lower mold 2a. The first upper mold 1a has a channel 1aF through which the molten thermoplastic elastomer composition flows and enters the first cavity 1a1 to form the septum 3b. The second cavity 1a2 is for accommodating a part of the common lower mold 2a. The common lower mold 2a has a moving pin 4 that can move up and down, a channel 2aF defined by the inner wall of the common lower mold 2a for the movement of the moving pin 4, and a support platform P. When the first upper mold 1a is combined with the common lower mold 2a as shown in Figure 1B, the molten thermoplastic elastomer composition enters the first cavity 1a1 as the molds are closed, under appropriate temperature and pressure for injection molding, resulting in the formation of the septum 3b. It is noteworthy that the moving pin 4 does not need to perform any telescopic action during the first molding process and only serves to support and hold the septum 3b. Figure 1C shows a schematic view after the injection molding of the septum 3b is complete and the first upper mold 1a is separated from the common lower mold 2a. It is important to note that the septum 3b remains on the common lower mold 2a at this point, allowing the septum 3b to stay in the position completed in the first molding process before proceeding to the second molding process.

### Step (2): The second molding process

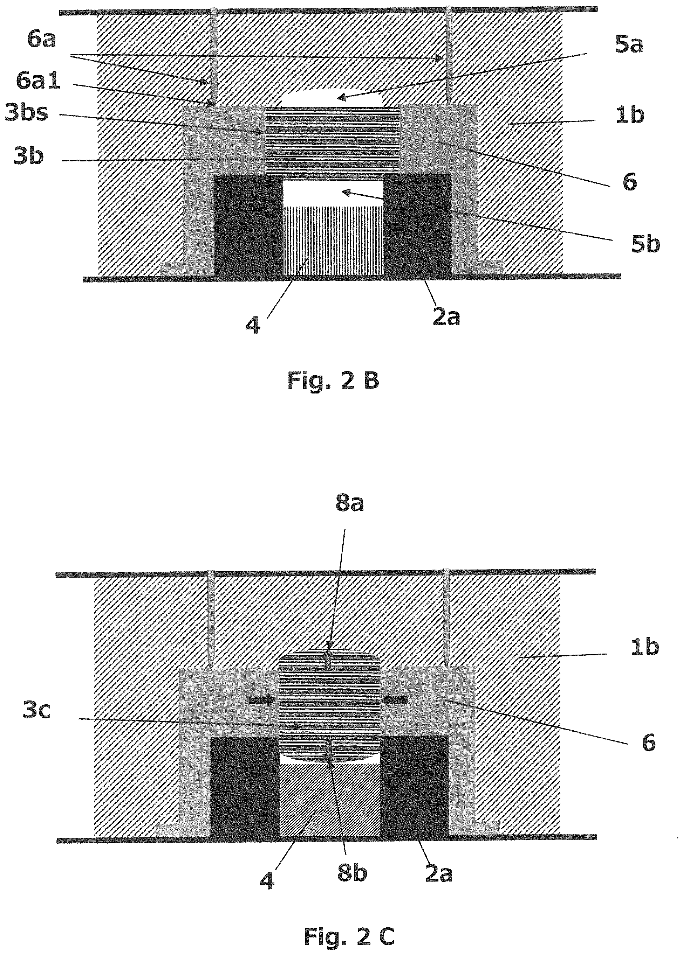

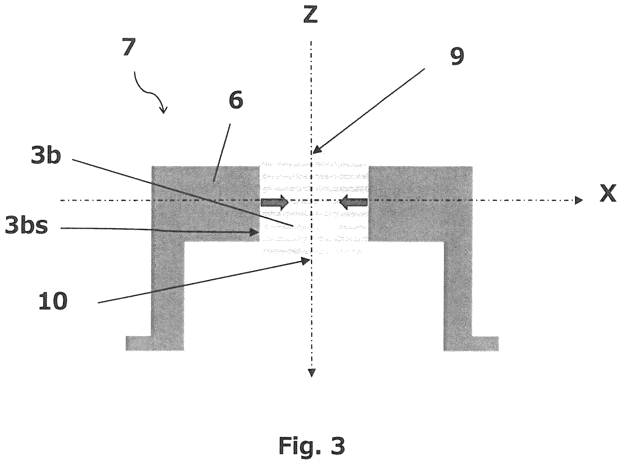

In Step (2), the housing is formed from a plastic composition using a second molding process. This second molding process pre-compresses the septum in a radial direction perpendicular to the needle-piercing direction of the septum. The second molding process includes clamping the septum between a second upper mold 1b and the previously mentioned common lower mold 2a. The common lower mold 2a used in both the first and second molding processes. Specifically, commercial plastic materials or a self-prepared plastic composition is first prepared by melting and kneading the various components of the plastic composition in an extruder according to the formulation to produce pellets for injection molding to manufacture the housing. Referring to Figures 2A, 2B, and 2C, the second molding process involves providing a second upper mold 1b, the previously mentioned common lower mold 2a, and the septum 3b produced from the first molding process. The second upper mold 1b has at least two channels 6a for the molten plastic composition to flow through and enter the third cavity 1b1 via the flow output 6a1 to form the housing. As previously mentioned, the common lower mold 2a includes a movable moving pin 4 and a support platform P. As shown in figures, the housing has an external shape defined by the third space 1b1, the side walls 3bs of the septum 3b, a portion of the top 2at of the common lower mold 2a that does not support the septum 3b, the side walls 2as, and the support platform P. Notably, the second upper mold 1b has a recessed space defining an upper cavity 5a corresponding to the top of the septum 3b. When the second upper mold 1b is combined with the common lower mold 2a as shown in Figure 2B (i.e., clamping the septum 3b between the second upper mold 1b and the common lower mold 2a), the upper cavity 5a is positioned rightly above the top of the septum 3b. At this time, the moving pin 4 moves downward to create an additional space defining a lower cavity 5b. The upper cavity 5a and lower cavity 5b are aligned along the needle-piercing direction Z of the septum 3b. At this time, the molten plastic composition enters the cavity formed after the molds closes, which is the third cavity 1b1, under appropriate temperature and pressure for injection molding, resulting in the formation of the housing 6. Figure 2B shows the molten plastic composition injected radially (X-direction shown in the figure is an illustration of perpendicular to the needle-piercing direction) around the septum 3b. The connection between the housing 6 and the side 3bs of the septum 3b is formed by pressing the septum 3b with a hot-melted plastic composition, wherein the housing 6 and the septum 3b are tightly bonded to form the stopper. The radial pressure exerted by the molten plastic composition causes the septum 3b to compress radially and expand into the upper cavity 5a and lower cavity 5b, forming expansion areas 8a and 8b, as shown in Figure 2C. Figure 3 shows a schematic view of the stopper 7, which includes the septum 3b and the housing 6, after removal from the mold following the first and second molding processes. The figure indicates the needle-piercing direction Z and the radial direction X perpendicular to the needle-piercing direction Z. The needle-piercing surface is labeled as 9, and the liquid contact surface as 10. As shown in Figure 3, the stopper 7 includes the septum 3b and the housing 6 supporting the septum 3b. The septum 3b is made from a thermoplastic elastomer composition, and the housing 6 is made from a plastic composition. The housing 6 is tightly connected to the side wall 3bs of the septum 3b, and the bonding of the housing 6 to the septum 3b can be achieved without the housing 6 touching the needle-piercing surface 9 and the liquid contact surface 10 of the septum 3b. The present invention is not limited to this. It remains within the scope of the invention when the edge portions of the needle-piercing surface 9 or the liquid contact surface 10 near the side wall 3bs of the septum 3b are in contact with the housing 6. As mentioned, the molten plastic composition radially presses the septum 3b, causing the needle-piercing surface 9 to slightly bulge upward and the liquid contact surface 10 to slightly bulge downward. Notably, the present invention is not limited by the accompanying drawings. For example, the shapes of the upper and lower cavities 5a and 5b or the shape of the moving pin 4 in the accompanying drawings are only one of preferred embodiments of the present invention. Other suitable molds with different shapes of upper or lower cavities but having the same function, or suitable moving pin having different shapes and the same function, are within the scope of the present invention.

### Step (3): Sterilizing the stopper with steam

According to ISO 15759, the stopper is sterilized with steam at 121°C for 30 minutes. After steam sterilization, if the septum retains a residual pre-compression level of 12% to 30% in the radial direction, it can pass the high-pressure bubble leakage test of ISO 15759. In a preferred example, the stopper can also pass the liquid leakage and weight-bearing test or average puncture force test of ISO 15759. In an even more preferred example, the stopper passes all three tests: high-pressure bubble leakage test, liquid leakage and weight-bearing test, and average puncture force test according to ISO 15759.

The pre-compression level and residual pre-compression level can be measured based on the thickness or average diameter of the septum. In detail, the following measurement is made before the septum experiences steam sterilization, and is referred to as "pre-compression level": the increase in thickness or decrease in average diameter of the septum due to the compression of the plastic composition of the housing during the housing molding is divided by the initial thickness or average diameter of the septum prior to the housing molding step (i.e., when the septum is not yet compressed). After the septum has been steam sterilized, the pre-compression level of the septum may change. Therefore, the compression level measured after the septum has been steam sterilized is the "residual pre-compression level". In detail, the following measurement is made after the septum experiences steam sterilization, and is referred to as "residual pre-compression level": the increase in thickness or decrease in average diameter of the septum due to the compression of the plastic composition of the housing during the housing molding is divided by the initial thickness or average diameter of the septum prior to the housing molding step (i.e., when the septum is not yet compressed). The pre-compression level or residual pre-compression level can be measured by vernier calipers or, alternatively, by taking a side-view x-ray scan of the finished medical I.V. stopper to make the measurement.

### Example 1

Using an injection molding machine manufactured by ARBURG (model: 320 C) from Germany, an appropriate amount of SEBS-A thermoplastic elastomer composition (components and properties listed in Table 1) is used to perform the first molding process described in Step (1) to obtain the septum. The initial average diameter of the septum is measured with a caliper, with the average diameter (to measure the needle-piercing surface or the liquid contact surface since the septum in this example is cylindrical and the needle-piercing surface is the same size as the liquid contact surface) about 14.0 mm and the thickness about 3.0 mm. Then, an appropriate amount of plastic composition PP K4520 (produced by Taiwan Chemical Fiber Co., Ltd., elastic modulus about 12,097 psi) is used to perform the second molding process described in Step (2). This results in a stopper with both a septum and a housing. After steam sterilization of the stopper at 121°C for 30 minutes according to ISO 15759, the average diameter of the compressed septum is measured with a caliper to calculate the residual pre-compression level. Various related performance tests are also conducted on the stopper.

The molding conditions for the first molding process are as follows: injection molding temperature: 180°C; injection pressure: 600 bar; injection speed: 35 mm/sec; holding time: 2.0 seconds; upper mold temperature, lower mold temperature: 40°C. The molding conditions for the second molding process are as follows: injection molding temperature: 240°C; injection pressure: 250-1500 bar (varies with different examples); injection speed: 75 mm/sec; holding time: 2.5 seconds; upper mold temperature, lower mold temperature: 50°C.

Examples 2 through 6 and Comparative Examples 1 through 6 are generally similar in operation to Example 1, with differences in the composition of the thermoplastic elastomer or the injection pressure in the second molding process. Table 1 shows the specific components and properties of the thermoplastic elastomer compositions used in each example and comparative example. Additionally, all components of the thermoplastic elastomers compositions used in the examples and comparative examples can be obtained from the market. Tables 2 through 5 show the injection pressures, residual pre-compression levels, and related performance test results for each example and comparative example.

| Table 1 | | | | |
|---|---|---|---|---|
| Thermoplastic elastomer composition | SEBS-A | SEBS-B | SEEPS | TPV-45A |
| Hardness-Shore-A | 40 | 31 | 35 | 49 |
| Elongation at break (%) | 250% | 577% | | 410% |
| MFI (230°C, 5kg) | 1.06 | 31 | 29.64 | 7.56 |

| Components | | | | |
|---|---|---|---|---|
| SEBS (Vector 8109) (phr) | 20 | 50 | | |
| SEBS (Vector 8101) (phr) | 80 | 50 | | |
| SEEPS (Septon 4077) (phr) | | | 100 | |
| PPO (phr) | | 15 | | |
| TPV (Santoprene 8211-45) (phr) | | | | 100 |
| White oil (phr) | 140 | 170 | 160 | |
| PP-866 (phr) | 13 | | 25 | |
| PP-3920 (phr) | | 13 | | |
| Filler (Kaolin) (phr) | 80 | 15 | | |
| Antioxidant (AO) (phr) | | | 0.6 | |
| Colorant (%) | | 3% | | |

| | Mw/10,000 | bonded vinyl aromatic content | vinyl bond content | Mw of Styrene block |
|---|---|---|---|---|
| SEBS (Vector 8109) | 44 | 29.5% | 37.5% | 43,000 |
| SEBS (Vector 8101) | 25 | 32.5% | 38% | 31,000 |
| SEEPS (Septon 4077) | 40 | 30% | 7% | 39,000 |

| Table 2 : Injection Pressure for the Second Molding Process 1000bar | | | |
|---|---|---|---|
| | Ex.1 | Ex. 2 | Ex. 3 |
| Thermoplastic elastomer composition | SEBS-A | SEBS-B | TPV-45A |
| Residual Pre-compression Level | 12.36% | 12.62% | 13.38% |
| Standard deviation of Residual Pre-compression Level (n) | 0.31%(40) | 0.37%(40) | 0.60%(40) |
| High-pressure Bubble Leakage Test | Y(20/20) | Y(20/20) | Y(20/20) |
| Liquid Leakage And Weight-Bearing Test | Y(40/40) | Y(40/40) | Y(40/40) |
| Average Puncture Force Test (n) | 46.86(40) | 43.57(40) | 40.12(40) |
| Standard deviation of Average Puncture Force Test (n) | 1.02(40) | 1.78(40) | 5.31(40) |

| Table 3 : Injection Pressure for the Second Molding Process 1500bar | | | |
|---|---|---|---|
| | Ex. 4 | Ex. 5 | Ex. 6 |
| Thermoplastic elastomer composition | SEBS-A | SEBS-B | TPV-45A |
| Residual Pre-compression Level | 17.43% | 17.20% | 17.10% |
| Standard deviation of Residual Pre-compression Level (n) | 0.80%(20) | 0.37%(20) | 0.70%(20) |
| High-pressure Bubble Leakage Test | Y(20/20) | Y(20/20) | Y(20/20) |
| Liquid Leakage And Weight-Bearing Test | Y(20/20) | Y(20/20) | Y(20/20) |
| Average Puncture Force Test (n) | 69.17(20) | 54.82(20) | 51.46(20) |
| Standard deviation of Average Puncture Force Test (n) | 4.26(20) | 3.82(20) | 1.36(20) |

| Table 4 : Injection Pressure for the Second Molding Process 250 bar | | | |
|---|---|---|---|
| | Comp. Ex. 1 | Comp. Ex. 2 | Comp. Ex. 3 |
| Thermoplastic elastomer composition | SEBS-A | SEBS-B | TPV-45A |
| Residual Pre-compression Level | 5.90% | 6.25% | 5.78% |
| Standard deviation of Residual Pre-compression Level (n) | 0.62%(20) | 0.76%(20) | 0.63%(20) |
| High-pressure Bubble Leakage Test | N(9/10) | N(7/10) | N(0/10) |
| Liquid Leakage And Weight-Bearing Test | N(11/20) | N(1/20) | N(0/20) |
| Average Puncture Force Test (n) | 38.97(5) | 38.85(5) | 29.01(5) |
| Standard deviation of Average Puncture Force Test (n) | 1.00(5) | 0.47(5) | 4.38(5) |

| Table 5 : Injection Pressure for the Second Molding Process 500 bar | | | |
|---|---|---|---|
| | Comp. Ex. 4 | Comp. Ex. 5 | Comp. Ex. 6 |
| Thermoplastic elastomer composition | SEBS-B | SEEPS-A | TPV-45A |
| Residual Pre-compression Level | 8.30% | 6.35% | 6.19% |
| Standard deviation of Residual Pre-compression Level (n) | 0.36%(20) | 0.47%(20) | 1.70%(20) |
| High-pressure Bubble Leakage Test | N(7/10) | N(13/20) | N(0/10) |
| Liquid Leakage And Weight-Bearing Test | N(8/20) | N(19/20) | Y(20/20) |
| Average Puncture Force Test (n) | 42.11(5) | 38.65(20) | 33.86(5) |
| Standard deviation of Average Puncture Force Test (n) | 0.72(5) | 1.47(20) | 0.45(5) |

In Tables 2 through 5, 19/20 represents the total number of samples (20) with the number of passing samples (19), and so on; n represents the number of samples; Y represents pass; N represents fail; and 46.86(40) indicates that the average value of 40 samples is 46.86, and so forth. For the average puncture force test, any result below 75N meets the standard.

The experimental data in Tables 2 through 5 show that the residual pre-compression levels of the thermoplastic elastomer compositions in the comparative examples range from 5.78% to 8.3%, all failing to meet the basic standards for high-pressure bubble leakage tests. The residual pre-compression levels in Examples 1-6 are above 12%, all of which meet the standards required for high-pressure bubble leakage tests, liquid leakage and weight-bearing tests, and average puncture force tests. Notably, different thermoplastic elastomer compositions, even under the same injection conditions and after steam sterilization, exhibit varying residual pre-compression levels. Additionally, it can be directly demonstrated from Examples 1-6 that for the same elastomer septum material, an increase in the residual pre-compression level leads to a significant change in average puncture force, and it is estimated that Examples 5-6 still have the potential to continue to increase the level of residual pre-compression upwards (e.g., 20-30%) until the average puncture force approaches the upper limit specified by ISO 15759 standards.

### Analysis Methods

Steam Sterilization: Per ISO 15759, steam sterilization at 121°C for 30 minutes.
Melt Flow Index: Tested according to ASTM D1238.
High-Pressure Bubble Leakage Test: According to the resealability test of ISO 15759.
Liquid Leakage and Weight-Bearing Test: According to the static spike-retention capability and leak resistance of the piercing area test of ISO 15759.
Puncture Force Test: According to the puncture force test of ISO 15759.
Weight-Average Molecular Weight of the Block Copolymer: Measured using a gel permeation chromatograph, a well-known method in the field.
Vinyl Aromatic Content of the Block Copolymer: Measured using a nuclear magnetic resonance analyzer, a well-known method in the field.
Vinyl Content of the Block Copolymer: Measured using a nuclear magnetic resonance analyzer, a well-known method in the field.
Weight-Average Molecular Weight of the Vinyl Aromatic Blocks of the Block Copolymer: Measured using a gel permeation chromatograph, a well-known method in the field.
Hardness: According to the specifications provided at the time of purchase; if not available, tested according to ASTM D2240.
Elongation at Break: According to product specification information or ASTM D412 standard tested at 23°C.

The above descriptions are preferred embodiments of the invention and are not intended to limit the scope of the patent application. Equivalent changes or modifications made without departing from the spirit of the invention should be included within the scope of the following patent claims.

## Claims

1. A manufacturing method used in a stopper for medical containers, the stopper having a septum and a housing supporting the septum, the manufacturing method comprising firstly creating the septum using a first molding process with a thermoplastic elastomer composition; then creating the housing using a second molding process with a plastic composition, by the second molding process the septum being pre-compressed in a radial direction perpendicular to a needle penetration direction of the septum; and subjecting the stopper to a steam sterilization, wherein after the septum experiences the steam sterilization, the septum exhibits a residual pre-compression level of 12% to 30% in the radial direction compared to when the septum is uncompressed, and the residual pre-compression level is measured based on a thickness or average diameter of the septum.

2. The manufacturing method of Claim 1, wherein the thermoplastic elastomer composition comprises one or any combination of the following: thermoplastic vulcanizate (TPV), styrenic block copolymer (SBC), thermoplastic polyurethane elastomer (TPU), thermoplastic olefin elastomer (TPO), thermoplastic polyester elastomer (TPE-E), or thermoplastic polyamide elastomer (TPEA).

3. The manufacturing method of Claim 1, wherein the thermoplastic elastomer composition has a Shore A hardness of Shore A 30 to Shore A 50 and an elongation at break equal to or greater than 250%.

4. The manufacturing method of Claim 1, wherein the plastic composition comprises one or any combination of the following: polyolefin, polycarbonate, polycarbonate alloy, polypropylene/styrene-ethylene-butylene-styrene block copolymer alloy (PP/SEBS alloy), high modulus thermoplastic polyurethane elastomer, or high modulus thermoplastic polyester elastomer.

5. The manufacturing method of Claim 1, wherein the first molding process and second molding process is implemented by selecting one of the following methods: co-injection molding process, insert-molding process, over-molding process, or multi-shot injection molding process.

6. The manufacturing method of Claim 1, wherein the second molding process comprises extruding a melt of the plastic composition to radially compress the septum and expand the septum along a direction perpendicular the radial direction.

7. The method of Claim 1, wherein the second molding process comprises placing the septum between an upper mold and a common lower mold, the upper mold having a upper cavity to accommodate an expansion of the septum, and the common lower mold further comprising an moving pin, the moving pin supporting and retaining the septum during the first molding process; and during the second molding process, the moving pin moving downward to form a lower cavity to accommodate an expansion of the septum as the upper mold and the common lower mold are closed.

8. The manufacturing method of Claim 1, wherein the septum is not subjected to any stress-relieving pretreatment prior to the pre-compression.

9. The manufacturing method of Claim 2, wherein the styrenic block copolymer comprises one or any combination of the following: styrene-ethylene-butylene-styrene block copolymer (SEBS), styrene-isoprene-styrene block copolymer (SIS), styrene-butadiene-styrene block copolymer (SBS), styrene-ethylene-propylene-styrene block copolymer (SEPS), styrene-(isoprene/butadiene)-styrene block copolymer (S-(I/B)-S), or styrene-[ethylene-(ethylene-propylene)]-styrene block copolymer (SEEPS).

10. The manufacturing method of Claim 1, wherein the thermoplastic elastomer composition comprises: (a) 100 parts by weight of a block copolymer of formula A-B-A, where A is a vinyl aromatic block, and B is a hydrogenated conjugated diene block with more than 90% hydrogenation rate, (b) 50-250 parts by weight of a plasticizer, and (c) 5-100 parts by weight of a polyolefin homopolymer.

11. The manufacturing method of Claim 10, wherein the thermoplastic elastomer composition further comprises: (d) greater than 0 but not more than 150 parts by weight of fillers, and (e) greater than 0 but not more than 50 parts by weight of polyphenylene oxide.

12. The manufacturing method of Claim 10, wherein the thermoplastic elastomer composition has a melt flow index (MFI) of 2 g/10 min to 60 g/10 min at 230°C and 5 kg.

13. The manufacturing method of Claim 10, wherein the weight-average molecular weight of the block copolymer is from 200,000 to 500,000, and the weight-average molecular weight of the block A is from 5,000 to 100,000.

14. The manufacturing method of Claim 10, wherein the block copolymer has a bonded vinyl aromatic content of from 20% to 50% by weight of the block copolymer, and has a vinyl bond content of from 32% to 42% by weight of block B of the block copolymer.

15. A stopper manufactured using any one of the manufacturing methods of Claims 1 to 14.
